# EUROPEAN PATENT APPLICATION

(11) **EP 4 679 692 A1**
(43) Date of publication of application: **14.01.2026**
(21) Application number: 24766339.6
(22) Date of filing: 29.02.2024
(51) Int. Cl.: H02M 1/00, B60L 15/00, H01L 23/48, H01R 13/02, H01R 4/00

(54) **ELECTRICAL DEVICE ASSEMBLY, CONTROLLER, AND VEHICLE**

(30) Priority: 03.03.2023 CN 202320516735 U
(71) Applicant: BYD Company Limited, Shenzhen, Guangdong 518118 (CN)
(72) Inventor: LING, Heping, Shenzhen, Guangdong 518118 (CN); WU, Yunfeng, Shenzhen, Guangdong 518118 (CN); TANG, Chengbo, Shenzhen, Guangdong 518118 (CN); CHENG, Jiawang, Shenzhen, Guangdong 518118 (CN); XIAO, Kai, Shenzhen, Guangdong 518118 (CN)
(74) Representative: Mathys & Squire
(86) International application number: PCT/CN2024/079447
(87) International publication number: WO 2024/183619

(57) **Abstract**

A vehicle has a controller. The controller has an electrical device assembly. The electrical device assembly includes a first electrical device and a second electrical device. The first electrical device includes a first electrical device body, a first positive electrode connection terminal, and a first negative electrode connection terminal. The second electrical device includes a second electrical device body, a second positive electrode connection terminal, and a second negative electrode connection terminal. The first positive electrode connection terminal and the first negative electrode connection terminal are stacked along a second direction. The second positive electrode connection terminal and the second negative electrode connection terminal are stacked along the second direction. The first positive electrode connection terminal is mated with the second positive electrode connection terminal along a first direction. The first negative electrode connection terminal is mated with the second negative electrode connection terminal along the first direction.

## Description

### CROSS-REFERENCE TO RELATED APPLICATIONS

The present disclosure claims priority to Chinese Patent Application No. 202320516735.4, filed with the China National Intellectual Property Administration on March 03, 2023 and entitled "ELECTRICAL DEVICE MODULE, CONTROL MODULE, AND VEHICLE", which is incorporated herein by reference in its entirety.

### TECHNICAL FIELD

The present disclosure relates to the technical field of electrical devices, and specifically, to an electrical device assembly, a controller, and a vehicle.

### BACKGROUND

In a related technology, after a support capacitor and a power device are electrically connected, stray inductance is often high. Such high stray inductance may lead to problems such as loss or signal attenuation in a circuit system.

### SUMMARY

An objective of the present disclosure is to provide an electrical device assembly, a controller, and a vehicle. The electrical device assembly can resolve technical problems existing in a related technology.

To achieve the foregoing objective, according to a first aspect of the present disclosure, an electrical device assembly is provided, including:
a first electrical device, including a first electrical device body, a first positive electrode connection terminal, and a first negative electrode connection terminal; and
a second electrical device, including a second electrical device body, a second positive electrode connection terminal, and a second negative electrode connection terminal, wherein
both the first positive electrode connection terminal and the first negative electrode connection terminal protrude from the first electrical device body along a first direction, and the first positive electrode connection terminal and the first negative electrode connection terminal are stacked along a second direction;
both the second positive electrode connection terminal and the second negative electrode connection terminal protrude from the second electrical device body along the first direction, and the second positive electrode connection terminal and the second negative electrode connection terminal are stacked along the second direction; and
the first positive electrode connection terminal is mated with the second positive electrode connection terminal along the first direction, the first negative electrode connection terminal is mated with the second negative electrode connection terminal along the first direction, and the first direction intersects with the second direction.

Optionally, one side of the first positive electrode connection terminal that is away from the first electrical device body along the first direction is mated with one side of the second positive electrode connection terminal that is away from the second electrical device body along the first direction, and one side of the first negative electrode connection terminal that is away from the first electrical device body along the first direction is mated with one side of the second negative electrode connection terminal that is away from the second electrical device body along the first direction.

Optionally, the first positive electrode connection terminal includes a first positive electrode connection sheet, the first negative electrode connection terminal includes a first negative electrode connection sheet, the second direction is a thickness direction of the first positive electrode connection sheet and the first negative electrode connection sheet, and a projection of the first positive electrode connection sheet along the second direction at least partially overlaps with a projection of the first negative electrode connection sheet along the second direction; and/or
the second positive electrode connection terminal includes a second positive electrode connection sheet, the second negative electrode connection terminal includes a second negative electrode connection sheet, the second direction is a thickness direction of the second positive electrode connection sheet and the second negative electrode connection sheet, and a projection of the second positive electrode connection sheet along the second direction at least partially overlaps with a projection of the second negative electrode connection sheet along the second direction.

Optionally, the first positive electrode connection sheet includes a first side surface away from the first electrical device body along the first direction, the second positive electrode connection sheet includes a second side surface away from the second electrical device body along the first direction, both the first side surface and the second side surface extend along the second direction and are parallel to each other, and the first side surface is configured to be oppositely fitted with and connected to the second side surface; and
the first negative electrode connection sheet includes a third side surface away from the first electrical device body along the first direction, the second negative electrode connection sheet includes a fourth side surface away from the second electrical device body along the first direction, both the third side surface and the fourth side surface extend along the second direction and are parallel to each other, and the third side surface is configured to be oppositely fitted with and connected to the fourth side surface.

Optionally, a thickness of the first positive electrode connection sheet is same as a thickness of the second positive electrode connection sheet, and/or a thickness of the first negative electrode connection sheet is same as a thickness of the second negative electrode connection sheet.

Optionally, a length of each of the first positive electrode connection sheet and the second positive electrode connection sheet along the first direction is a first size, a length of each of the first negative electrode connection sheet and the second negative electrode connection sheet along the first direction is a second size, and the first size is same as the second size.

Optionally, a length of the first positive electrode connection sheet along a third direction is same as a length of the first negative electrode connection sheet along the third direction, and any two of the first direction, the second direction, and the third direction are perpendicular to each other; and/or
a length of the second positive electrode connection sheet along a third direction is same as a length of the second negative electrode connection sheet along the third direction, and any two of the first direction, the second direction, and the third direction are perpendicular to each other.

Optionally, the first electrical device further includes a first insulating portion, the first insulating portion protrudes from the first electrical device body along the first direction, and the first insulating portion is located between the first positive electrode connection terminal and the first negative electrode connection terminal;
the second electrical device further includes a second insulating portion, the second insulating portion protrudes from the second electrical device body along the first direction, and the second insulating portion is located between the second positive electrode connection terminal and the second negative electrode connection terminal; and
the first insulating portion at least partially overlaps with the second insulating portion.

Optionally, the side of the first positive electrode connection terminal that is away from the first electrical device body along the first direction is mated with the side of the second positive electrode connection terminal that is away from the second electrical device body along the first direction by molten fusion, and/or the side of the first negative electrode connection terminal that is away from the first electrical device body along the first direction is mated with the side of the second negative electrode connection terminal that is away from the second electrical device body along the first direction by molten fusion.

Optionally, the side of the first positive electrode connection terminal that is away from the first electrical device body along the first direction is spaced from, along the first direction, the side of the first negative electrode connection terminal that is away from the first electrical device body along the first direction.

Optionally, a size of a spacing between the first positive electrode connection terminal and the first negative electrode connection terminal along the second direction is not greater than 1 mm, and a size of a spacing between the second positive electrode connection terminal and the second negative electrode connection terminal along the second direction is not greater than 1 mm.

According to a second aspect of the present disclosure, a controller is further provided. The controller includes the electrical device assembly. The first electrical device includes a capacitor, the first positive electrode connection terminal is configured as a positive electrode output terminal of the capacitor, the first negative electrode connection terminal is configured as a negative electrode output terminal of the capacitor, the second electrical device includes a power device, the second positive electrode connection terminal is configured as a positive electrode input terminal of the power device, and the second negative electrode connection terminal is configured as a negative electrode input terminal of the power device.

According to a third aspect of the present disclosure, a vehicle is further provided. The vehicle includes the controller or the electrical device assembly.

In the foregoing technical solutions, the first positive electrode connection terminal of the first electrical device is mated with the second positive electrode connection terminal of the second electrical device, and the first negative electrode connection terminal of the first electrical device is mated with the second negative electrode connection terminal of the second electrical device; and the first positive electrode connection terminal and the first negative electrode connection terminal are stacked along the second direction, and the second positive electrode connection terminal and the second negative electrode connection terminal are stacked along the second direction. Then, the first positive electrode connection terminal, the second positive electrode connection terminal, the first negative electrode connection terminal, and the second negative electrode connection terminal can form an inductive loop. A first magnetic field generated by current flowing through the first positive electrode connection terminal and the second positive electrode connection terminal can be canceled by a second magnetic field generated by current flowing through the first negative electrode connection terminal and the second negative electrode connection terminal, that is, a direction of a magnetic field generated by a current line through the first positive electrode connection terminal and the second positive electrode connection terminal can be opposite to a direction of a magnetic field generated by a current line through the first negative electrode connection terminal and the second negative electrode connection terminal, thereby enabling mutual cancellation of the magnetic fields, reducing generation of stray inductance, and reducing loss or signal attenuation in a circuit.

Other features and advantages of the present disclosure will be described in detail in the subsequent description of embodiments.

### BRIEF DESCRIPTION OF DRAWINGS

The accompanying drawings are intended to provide a further understanding of the present disclosure and constitute a part of the specification, and are used together with the following specific implementations to explain the present disclosure, but do not constitute a limitation on the present disclosure. In the accompanying drawings:
FIG. 1 is a schematic diagram of a three-dimensional structure of an electrical device assembly according to an implementation of the present disclosure;
FIG. 2 is a schematic diagram of a three-dimensional structure of an electrical device assembly according to an implementation of the present disclosure, where a perspective in FIG. 2 is different from that in FIG. 1;
FIG. 3 is a side view of an electrical device assembly according to an implementation of the present disclosure;
FIG. 4 is a partially enlarged view at a position D in FIG. 3;
FIG. 5 is a schematic diagram of a three-dimensional structure of a first electrical device of an electrical device assembly according to an implementation of the present disclosure;
FIG. 6 is a schematic diagram of a three-dimensional structure of a first electrical device of an electrical device assembly according to an implementation of the present disclosure, where a perspective in FIG. 6 is different from that in FIG. 5;
FIG. 7 is a side view of a first electrical device of an electrical device assembly according to an implementation of the present disclosure;
FIG. 8 is a schematic diagram of a three-dimensional structure of a second electrical device of an electrical device assembly according to an implementation of the present disclosure;
FIG. 9 is a front view of a second electrical device of an electrical device assembly according to an implementation of the present disclosure;
FIG. 10 is a side view of a second electrical device of an electrical device assembly according to an implementation of the present disclosure;
FIG. 11 is a schematic diagram of a controller according to an implementation of the present disclosure;
FIG. 12 is a schematic diagram of a vehicle according to an implementation of the present disclosure, where the vehicle in the figure includes a controller; and
FIG. 13 is a schematic diagram of a vehicle according to another implementation of the present disclosure, where the vehicle in the figure includes an electrical device assembly.

### DESCRIPTION OF EMBODIMENTS

The particular implementations of the present disclosure will be described in detail below in combination with the accompanying drawings. It will be understood that the particular implementations described herein are merely intended to describe and explain the present disclosure and are not intended to limit the present disclosure.

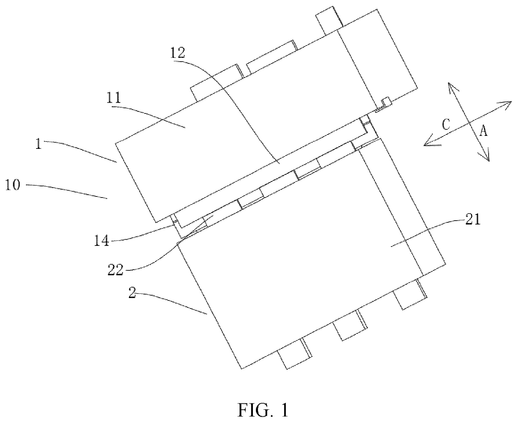

In the present disclosure, unless otherwise specified, the directional terms such as "first direction", "second direction", and "third direction" used are merely directions defined for the convenience of describing a structure of an electrical device assembly 10, and are not intended to limit the electrical device assembly 10. For details, refer to FIG. 1. The terms such as "first" and "second" used are merely used to distinguish one element from another, and do not imply any order or relative importance.

Among three core systems of a new energy vehicle, a controller is one of the most critical parts. In the controller, a support capacitor and a power device are primary components. The support capacitor (also referred to as a DC-Link capacitor) mainly serves to protect the power device (by absorbing a ripple and the like), thereby preventing the power device from being broken down due to a high voltage. The power device converts a power output to provide a three-phase power input to a motor.

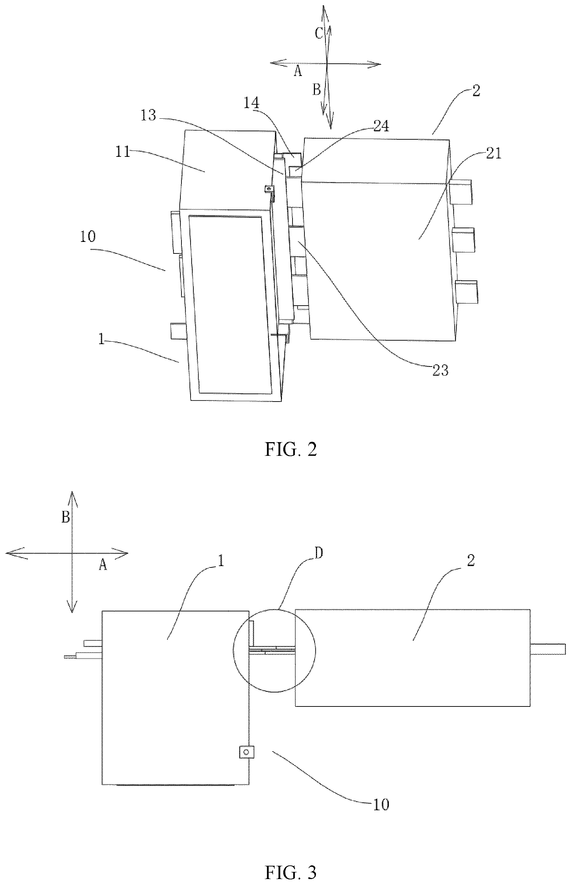

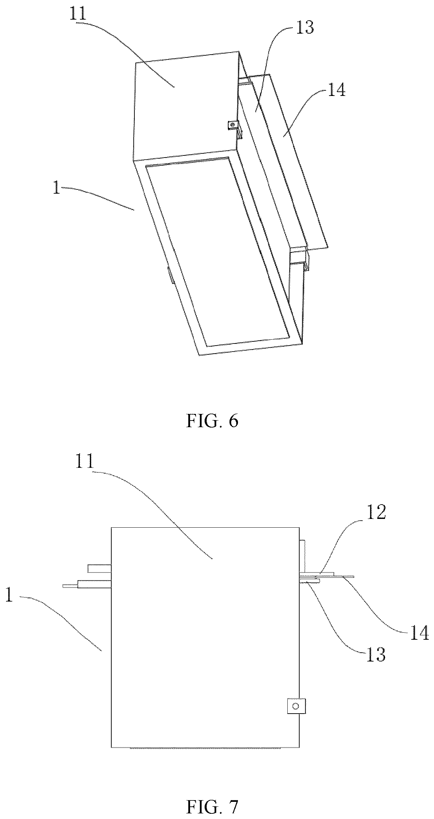

As shown in FIG. 1 to FIG. 10, the present disclosure provides an electrical device assembly 10. The electrical device assembly 10 includes a first electrical device 1 and a second electrical device 2. The first electrical device 1 includes a first electrical device body 11, a first positive electrode connection terminal 12, and a first negative electrode connection terminal 13. The second electrical device 2 includes a second electrical device body 21, a second positive electrode connection terminal 22, and a second negative electrode connection terminal 23. Both the first positive electrode connection terminal 12 and the first negative electrode connection terminal 13 protrude from the first electrical device body 11 along a first direction A, and the first positive electrode connection terminal 12 and the first negative electrode connection terminal 13 are stacked along a second direction B. Both the second positive electrode connection terminal 22 and the second negative electrode connection terminal 23 protrude from the second electrical device body 21 along the first direction A, and the second positive electrode connection terminal 22 and the second negative electrode connection terminal 23 are stacked along the second direction B. The first positive electrode connection terminal 12 is mated with the second positive electrode connection terminal 22 along the first direction A, the first negative electrode connection terminal 13 is mated with the second negative electrode connection terminal 23 along the first direction A, and the first direction A intersects with the second direction B.

In the foregoing technical solution, the first positive electrode connection terminal 12 of the first electrical device 1 is mated with the second positive electrode connection terminal 22 of the second electrical device 2, and the first negative electrode connection terminal 13 of the first electrical device 1 is mated with the second negative electrode connection terminal 23 of the second electrical device 2; and the first positive electrode connection terminal 12 and the first negative electrode connection terminal 13 are stacked along the second direction B, and the second positive electrode connection terminal 22 and the second negative electrode connection terminal 23 are stacked along the second direction B. Then, the first positive electrode connection terminal 12, the second positive electrode connection terminal 22, the first negative electrode connection terminal 13, and the second negative electrode connection terminal 23 can form an inductive loop. A first magnetic field generated by current flowing through the first positive electrode connection terminal 12 and the second positive electrode connection terminal 22 can be canceled by a second magnetic field generated by current flowing through the first negative electrode connection terminal 13 and the second negative electrode connection terminal 23, that is, a direction of a magnetic field generated by a current line through the first positive electrode connection terminal 12 and the second positive electrode connection terminal 22 can be opposite to a direction of a magnetic field generated by a current line through the first negative electrode connection terminal 13 and the second negative electrode connection terminal 23, thereby enabling mutual cancellation of the magnetic fields, reducing generation of stray inductance, and reducing loss or signal attenuation in a circuit.

In an optional implementation, as shown in FIG. 1 to FIG. 4, one side of the first positive electrode connection terminal 12 that is away from the first electrical device body 11 along the first direction A is mated with one side of the second positive electrode connection terminal 22 that is away from the second electrical device body 21 along the first direction A, and one side of the first negative electrode connection terminal 13 that is away from the first electrical device body 11 along the first direction A is mated with one side of the second negative electrode connection terminal 23 that is away from the second electrical device body 21 along the first direction A.

In this implementation, the side of the first positive electrode connection terminal 12 that is away from the first electrical device body 11 along the first direction A may be directly mated with or mated with, by using an intermediate connection piece (not shown), the side of the second positive electrode connection terminal 22 that is away from the second electrical device body 21 along the first direction A. This is not limited in the present disclosure. In addition, the side of the first negative electrode connection terminal 13 that is away from the first electrical device body 11 along the first direction A may be directly mated with or mated with, by using an intermediate connection piece, the side of the second negative electrode connection terminal 23 that is away from the second electrical device body 21 along the first direction A. This is also not limited in the present disclosure.

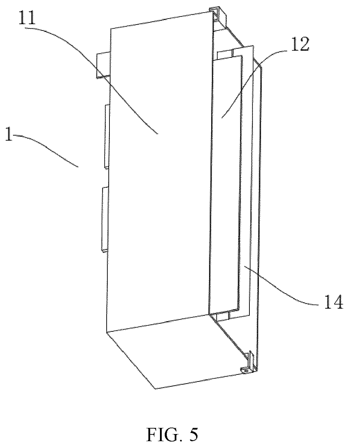

Optionally, as shown in FIG. 5 to FIG. 7, the first positive electrode connection terminal 12 includes a first positive electrode connection sheet, the first negative electrode connection terminal 13 includes a first negative electrode connection sheet, the second direction B is a thickness direction of the first positive electrode connection sheet and the first negative electrode connection sheet, and a projection of the first positive electrode connection sheet along the second direction B at least partially overlaps with a projection of the first negative electrode connection sheet along the second direction B.

In this implementation, the first positive electrode connection terminal 12 and the first negative electrode connection terminal 13 each are configured as a connection sheet structure, and the second direction B is the thickness direction of the first positive electrode connection sheet and the first negative electrode connection sheet. In addition, the projection of the first positive electrode connection sheet along the second direction B at least partially overlaps with the projection of the first negative electrode connection sheet along the second direction B. Therefore, the first positive electrode connection sheet and the first negative electrode connection sheet with different polarities are stacked, to greatly reduce the formed inductive loop, thereby reducing generation of stray inductance.

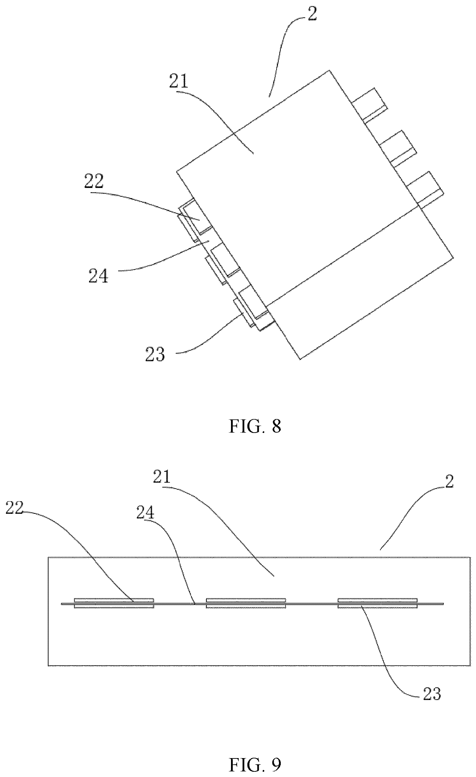

Optionally, as shown in FIG. 8 to FIG. 10, the second positive electrode connection terminal 22 includes a second positive electrode connection sheet, the second negative electrode connection terminal 23 includes a second negative electrode connection sheet, the second direction B is a thickness direction of the second positive electrode connection sheet and the second negative electrode connection sheet, and a projection of the second positive electrode connection sheet along the second direction B at least partially overlaps with a projection of the second negative electrode connection sheet along the second direction B.

In this implementation, the second positive electrode connection terminal 22 and the second negative electrode connection terminal 23 each are configured as a connection sheet structure, and the second direction B is the thickness direction of the second positive electrode connection sheet and the second negative electrode connection sheet. In addition, the projection of the second positive electrode connection sheet along the second direction B at least partially overlaps with the projection of the second negative electrode connection sheet along the second direction B. Therefore, the second positive electrode connection sheet and the second negative electrode connection sheet with different polarities are stacked, to greatly reduce the formed inductive loop, thereby reducing generation of stray inductance.

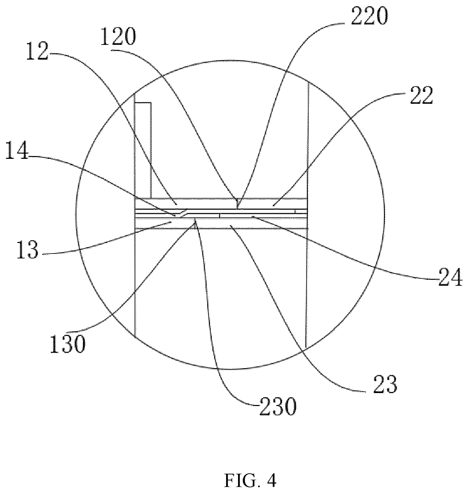

In another implementation, as shown in FIG. 4, the first positive electrode connection sheet includes a first side surface 120 away from the first electrical device body 11 along the first direction A; and the second positive electrode connection sheet includes a second side surface 220 away from the second electrical device body 21 along the first direction A. Both the first side surface 120 and the second side surface 220 extend along the second direction B and are parallel to each other, and the first side surface 120 is configured to be oppositely fitted with and connected to the second side surface 220. The first negative electrode connection sheet includes a third side surface 130 away from the first electrical device body 11 along the first direction A; and the second negative electrode connection sheet includes a fourth side surface 230 away from the second electrical device body 21 along the first direction A. Both the third side surface 130 and the fourth side surface 230 extend along the second direction B and are parallel to each other, and the third side surface 130 is configured to be oppositely fitted with and connected to the fourth side surface 230.

In this implementation, the first side surface 120 of the first positive electrode connection sheet and the second side surface 220 of the second positive electrode connection sheet are oppositely fitted with and connected to each other, and the third side surface 130 of the first negative electrode connection sheet and the fourth side surface 230 are oppositely fitted with and connected to each other. In this way, connection stability can be effectively improved through face-to-face fitting and connection. In a connection process, mating contact surfaces of the first side surface 120 and the second side surface 220 and mating contact surfaces of the third side surface 130 and the fourth side surface 230 need to be as flat as possible, thereby narrowing a gap between the mating surfaces, for example, the gap between the mating surfaces may not exceed 0.2 mm, thereby improving connection stability.

Optionally, as shown in FIG. 4, a thickness of the first positive electrode connection sheet is same as a thickness of the second positive electrode connection sheet, and/or a thickness of the first negative electrode connection sheet is same as a thickness of the second negative electrode connection sheet. The same thicknesses can ensure that current does not abruptly change during circulation, thereby improving flowing stability of the current. In addition, the same thicknesses can further improve connection stability.

As shown in FIG. 4, a length of each of the first positive electrode connection sheet and the second positive electrode connection sheet along the first direction A is a first size, a length of each of the first negative electrode connection sheet and the second negative electrode connection sheet along the first direction A is a second size, and the first size is same as the second size. Because the first size is the same as the second size, the magnetic field generated by the current line through first positive electrode connection sheet and the second positive electrode connection sheet can be canceled by the magnetic field generated by the current line through the first negative electrode connection sheet and the second negative electrode connection sheet, thereby further reducing generation of stray inductance.

Optionally, a length of the first positive electrode connection sheet along a third direction C is same as a length of the first negative electrode connection sheet along the third direction C, and any two of the first direction A, the second direction B, and the third direction C are perpendicular to each other. Because the length of the first positive electrode connection sheet along the third direction C is the same as the length of the first negative electrode connection sheet along the third direction C, the first positive electrode connection sheet and the first negative electrode connection sheet can be correspondingly stacked along the third direction C, thereby further reducing generation of stray inductance.

Optionally, a length of the second positive electrode connection sheet along a third direction C is same as a length of the second negative electrode connection sheet along the third direction C, and any two of the first direction A, the second direction B, and the third direction C are perpendicular to each other. Because the length of the second positive electrode connection sheet along the third direction C is the same as the length of the second negative electrode connection sheet along the third direction C, the second positive electrode connection sheet and the second negative electrode connection sheet can be correspondingly stacked along the third direction C, thereby further reducing generation of stray inductance.

As shown in FIG. 1 to FIG. 4, the first electrical device 1 further includes a first insulating portion 14, the first insulating portion 14 protrudes from the first electrical device body 11 along the first direction A, and the first insulating portion 14 is located between the first positive electrode connection terminal 12 and the first negative electrode connection terminal 13. The second electrical device 2 further includes a second insulating portion 24, the second insulating portion 24 protrudes from the second electrical device body 21 along the first direction A, and the second insulating portion 24 is located between the second positive electrode connection terminal 22 and the second negative electrode connection terminal 23. The first insulating portion 14 at least partially overlaps with the second insulating portion 24.

The first positive electrode connection terminal 12 can be insulated from the first negative electrode connection terminal 13 by disposing the first insulating portion 14, and the second positive electrode connection terminal 22 can be insulated from the second negative electrode connection terminal 23 by disposing the second insulating portion 24, thereby improving safety. In addition, the first insulating portion 14 at least partially overlaps with the second insulating portion 24, to effectively prolong a creepage distance, thereby further improving insulation performance.

The first insulating portion 14 may include at least one first insulating layer, and the second insulating portion 24 may include at least one second insulating layer. However, specific structures of the first insulating portion 14 and the second insulating portion 24 are not limited in the present disclosure. In addition, specific quantities of first insulating layers and second insulating layers are not limited in the present disclosure. In addition, the first insulating layer and the second insulating layer may be made of a flexible material, which facilitates bending without damage, and facilitates overlapping between the first insulating layer and the second insulating layer.

In another implementation, the first insulating portion 14 may be injection-molded integrally with a housing of the first electrical device body 11, or may extend out of the first electrical device body 11. Similarly, the second insulating portion 24 may be injection-molded integrally with a housing of the second electrical device body 21, or may extend out of the second electrical device body 21.

Optionally, a specific gap may be remained between the second insulating portion 24 and the second positive electrode connection terminal 22 or the second negative electrode connection terminal 23, so that the first insulating portion 14 is inserted to overlap with the first insulating portion 14.

In an implementation, the side of the first positive electrode connection terminal 12 that is away from the first electrical device body 11 along the first direction A is mated with the side of the second positive electrode connection terminal 22 that is away from the second electrical device body 21 along the first direction A by molten fusion. A gap between the first positive electrode connection terminal 12 and the second positive electrode connection terminal 22 can be effectively filled by molten fusion bonding, to ensure sufficient connection between the first positive electrode connection terminal 12 and the second positive electrode connection terminal 22. However, a connection manner between the first positive electrode connection terminal 12 and the second positive electrode connection terminal 22 is not limited in the present disclosure.

In another implementation, the side of the first negative electrode connection terminal 13 that is away from the first electrical device body 11 along the first direction A is mated with the side of the second negative electrode connection terminal 23 that is away from the second electrical device body 21 along the first direction A by molten fusion. A gap between the first negative electrode connection terminal 13 and the second negative electrode connection terminal 23 can be effectively filled by molten fusion connection, to ensure sufficient connection between the first negative electrode connection terminal 13 and the second negative electrode connection terminal 23. However, a connection manner between the first negative electrode connection terminal 13 and the second negative electrode connection terminal 23 is not limited in the present disclosure.

As shown in FIG. 4, the side of the first positive electrode connection terminal 12 that is away from the first electrical device body 11 along the first direction A is spaced from, along the first direction A, the side of the first negative electrode connection terminal 13 that is away from the first electrical device body 11 along the first direction A.

That is, a molten fusion position between the first positive electrode connection terminal 12 and the second positive electrode connection terminal 22 is staggered with a molten fusion position between the first negative electrode connection terminal 13 and the second negative electrode connection terminal 23 along the first direction A, to prevent the first insulating portion 14 and the second insulating portion 24 from being damaged because the two molten fusion positions opposite to each other generate a high temperature in a same region.

Optionally, a size of a spacing between the first positive electrode connection terminal 12 and the first negative electrode connection terminal 13 along the second direction B is not greater than 1 mm, and a size of a spacing between the second positive electrode connection terminal 22 and the second negative electrode connection terminal 23 along the second direction B is not greater than 1 mm. Therefore, a path jointly formed by the first positive electrode connection terminal 12, the second positive electrode connection terminal 22, the first negative electrode connection terminal 13, and the second negative electrode connection terminal 23 is as small as possible, that is, the formed inductive loop is as small as possible, thereby reducing generation of stray inductance.

In addition, for the second electrical device 2, as shown in FIG. 8 to FIG. 10, a plurality of second positive electrode connection terminals 22 may be disposed, and any two of the plurality of second positive electrode connection terminals 22 are spaced from each other along the third direction C; and a plurality of second negative electrode connection terminals 23 may be disposed in a one-to-one correspondence with the plurality of second positive electrode connection terminals 22, and any two of the plurality of second negative electrode connection terminals 23 are spaced from each other along the third direction C. A length of each second positive electrode connection terminal 22 along the third direction C may be equal to a length of a corresponding second negative electrode connection terminal 23 along the third direction C, to ensure overlapping between the second positive electrode connection terminal 22 and the second negative electrode connection terminal 23 along the third direction C, thereby further reducing generation of stray inductance.

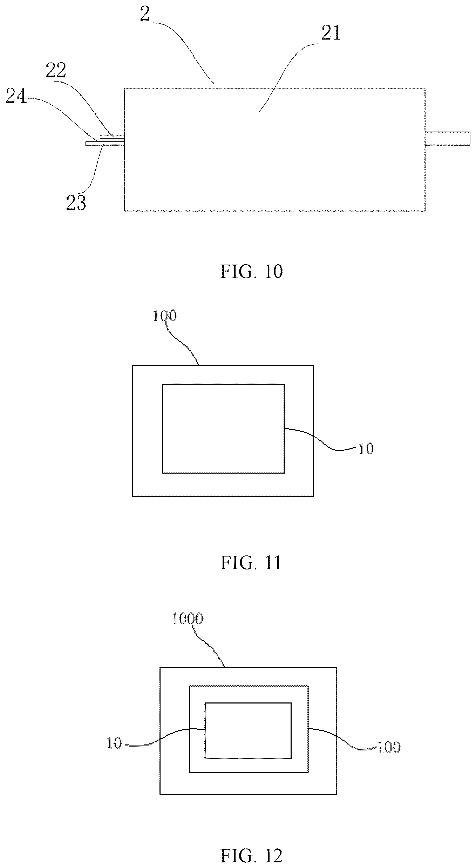

As shown in FIG. 11, the present disclosure further provides a controller 100. The controller 100 includes the foregoing electrical device assembly 10. The first electrical device 1 includes a capacitor, the first positive electrode connection terminal 12 is configured as a positive electrode output terminal of the capacitor, and the first negative electrode connection terminal 13 is configured as a negative electrode output terminal of the capacitor. The second electrical device 2 includes a power device, the second positive electrode connection terminal 22 is configured as a positive electrode input terminal of the power device, and the second negative electrode connection terminal 23 is configured as a negative electrode input terminal of the power device.

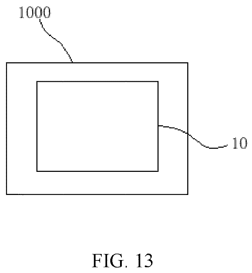

As shown in FIG. 12 and FIG. 13, the present disclosure further provides a vehicle 1000. The vehicle 1000 includes the foregoing controller 100 or the foregoing electrical device assembly 10.

The foregoing describes in detail the preferred implementations of the present disclosure with reference to the accompanying drawings. However, the present disclosure is not limited to specific details in the foregoing implementations. A plurality of simple variations can be made to the technical solutions of the present disclosure within the technical concept scope of the present disclosure, and all these simple variations fall within the protection scope of the present disclosure.

Moreover, it should be noted that various specific technical features described in the particular implementations described above can be combined in any suitable manner without contradiction, and to avoid unnecessary repetition, various possible combinations are not separately explained in the present disclosure.

In addition, the various different implementations of the present disclosure may also be combined in any manner, and the combination should also be considered as content disclosed in the present disclosure provided that the combination does not deviate from the idea of the present disclosure.

## Claims

1. An electrical device assembly (10), comprising:
a first electrical device (1), comprising a first electrical device body (11), a first positive electrode connection terminal (12), and a first negative electrode connection terminal (13); and
a second electrical device (2), comprising a second electrical device body (21), a second positive electrode connection terminal (22), and a second negative electrode connection terminal (23), wherein
both the first positive electrode connection terminal (12) and the first negative electrode connection terminal (13) protrude from the first electrical device body (11) along a first direction (A), and the first positive electrode connection terminal (12) and the first negative electrode connection terminal (13) are stacked along a second direction (B);
both the second positive electrode connection terminal (22) and the second negative electrode connection terminal (23) protrude from the second electrical device body (21) along the first direction (A), and the second positive electrode connection terminal (22) and the second negative electrode connection terminal (23) are stacked along the second direction (B); and
the first positive electrode connection terminal (12) is mated with the second positive electrode connection terminal (22) along the first direction (A), the first negative electrode connection terminal (13) is mated with the second negative electrode connection terminal (23) along the first direction (A), and the first direction (A) intersects with the second direction (B).

2. The electrical device assembly (10) according to claim 1, wherein one side of the first positive electrode connection terminal (12) that is away from the first electrical device body (11) along the first direction (A) is mated with one side of the second positive electrode connection terminal (22) that is away from the second electrical device body (21) along the first direction (A), and one side of the first negative electrode connection terminal (13) that is away from the first electrical device body (11) along the first direction (A) is mated with one side of the second negative electrode connection terminal (23) that is away from the second electrical device body (21) along the first direction (A).

3. The electrical device assembly (10) according to claim 1 or 2, wherein
the first positive electrode connection terminal (12) comprises a first positive electrode connection sheet, the first negative electrode connection terminal (13) comprises a first negative electrode connection sheet, the second direction (B) is a thickness direction of the first positive electrode connection sheet and the first negative electrode connection sheet, and a projection of the first positive electrode connection sheet along the second direction (B) at least partially overlaps with a projection of the first negative electrode connection sheet along the second direction (B); and/or
the second positive electrode connection terminal (22) comprises a second positive electrode connection sheet, the second negative electrode connection terminal (23) comprises a second negative electrode connection sheet, the second direction (B) is a thickness direction of the second positive electrode connection sheet and the second negative electrode connection sheet, and a projection of the second positive electrode connection sheet along the second direction (B) at least partially overlaps with a projection of the second negative electrode connection sheet along the second direction (B).

4. The electrical device assembly (10) according to claim 3, wherein
the first positive electrode connection sheet comprises a first side surface (120) away from the first electrical device body (11) along the first direction (A), the second positive electrode connection sheet comprises a second side surface (220) away from the second electrical device body (21) along the first direction (A), both the first side surface (120) and the second side surface (220) extend along the second direction (B) and are parallel to each other, and the first side surface (120) is configured to be oppositely fitted with and connected to the second side surface (220); and
the first negative electrode connection sheet comprises a third side surface (130) away from the first electrical device body (11) along the first direction (A), the second negative electrode connection sheet comprises a fourth side surface (230) away from the second electrical device body (21) along the first direction (A), both the third side surface (130) and the fourth side surface (230) extend along the second direction (B) and are parallel to each other, and the third side surface (130) is configured to be oppositely fitted with and connected to the fourth side surface (230).

5. The electrical device assembly (10) according to claim 4, wherein a thickness of the first positive electrode connection sheet is same as a thickness of the second positive electrode connection sheet, and/or a thickness of the first negative electrode connection sheet is same as a thickness of the second negative electrode connection sheet.

6. The electrical device assembly (10) according to claim 4, wherein a length of each of the first positive electrode connection sheet and the second positive electrode connection sheet along the first direction (A) is a first size, a length of each of the first negative electrode connection sheet and the second negative electrode connection sheet along the first direction (A) is a second size, and the first size is same as the second size.

7. The electrical device assembly (10) according to any one of claims 3 to 6, wherein
a length of the first positive electrode connection sheet along a third direction (C) is same as a length of the first negative electrode connection sheet along the third direction (C), and any two of the first direction (A), the second direction (B), and the third direction (C) are perpendicular to each other; and/or
a length of the second positive electrode connection sheet along a third direction (C) is same as a length of the second negative electrode connection sheet along the third direction (C), and any two of the first direction (A), the second direction (B), and the third direction (C) are perpendicular to each other.

8. The electrical device assembly (10) according to any one of claims 1 to 7, wherein
the first electrical device (1) further comprises a first insulating portion (14), the first insulating portion (14) protrudes from the first electrical device body (11) along the first direction (A), and the first insulating portion (14) is located between the first positive electrode connection terminal (12) and the first negative electrode connection terminal (13);
the second electrical device (2) further comprises a second insulating portion (24), the second insulating portion (24) protrudes from the second electrical device body (21) along the first direction (A), and the second insulating portion (24) is located between the second positive electrode connection terminal (22) and the second negative electrode connection terminal (23); and
the first insulating portion (14) at least partially overlaps with the second insulating portion (24).

9. The electrical device assembly (10) according to any one of claims 1 to 8, wherein the side of the first positive electrode connection terminal (12) that is away from the first electrical device body (11) along the first direction (A) is mated with the side of the second positive electrode connection terminal (22) that is away from the second electrical device body (21) along the first direction (A) by molten fusion, and/or the side of the first negative electrode connection terminal (13) that is away from the first electrical device body (11) along the first direction (A) is mated with the side of the second negative electrode connection terminal (23) that is away from the second electrical device body (21) along the first direction (A) by molten fusion.

10. The electrical device assembly (10) according to claim 9, wherein the side of the first positive electrode connection terminal (12) that is away from the first electrical device body (11) along the first direction (A) is spaced from, along the first direction (A), the side of the first negative electrode connection terminal (13) that is away from the first electrical device body (11) along the first direction (A).

11. The electrical device assembly (10) according to any one of claims 1 to 10, wherein a size of a spacing between the first positive electrode connection terminal (12) and the first negative electrode connection terminal (13) along the second direction (B) is not greater than 1 mm, and a size of a spacing between the second positive electrode connection terminal (22) and the second negative electrode connection terminal (23) along the second direction (B) is not greater than 1 mm.

12. A controller (100), wherein the controller (100) comprises the electrical device assembly (10) according to any one of claims 1 to 11; and
the first electrical device (1) comprises a capacitor, the first positive electrode connection terminal (12) is configured as a positive electrode output terminal of the capacitor, the first negative electrode connection terminal (13) is configured as a negative electrode output terminal of the capacitor, the second electrical device (2) comprises a power device, the second positive electrode connection terminal (22) is configured as a positive electrode input terminal of the power device, and the second negative electrode connection terminal (23) is configured as a negative electrode input terminal of the power device.

13. A vehicle (1000), wherein the vehicle (1000) comprises the controller (100) according to claim 12 or the electrical device assembly (10) according to any one of claims 1 to 11.
